Europäisches Patentamt

European Patent Office

Office européen des brevets

(11) Veröffentlichungsnummer: **0 309 635 B1**

# EUROPÄISCHE PATENTSCHRIFT

(45) Veröffentlichungstag der Patentschrift: **16.12.92**

(21) Anmeldenummer: **87730114.3**

(22) Anmeldetag: **28.09.87**

(51) Int. Cl.5: **B41J 19/00**, F16H 7/12

(54) Vorrichtung zum Spannen eines Zugelementes in einem Drucker, insbesondere in einem Matrixdrucker.

(43) Veröffentlichungstag der Anmeldung:
**05.04.89 Patentblatt 89/14**

(45) Bekanntmachung des Hinweises auf die Patenterteilung:
**16.12.92 Patentblatt 92/51**

(84) Benannte Vertragsstaaten:
**AT BE CH DE FR GB IT LI NL**

(56) Entgegenhaltungen:
**US-A- 4 484 485**
**US-A- 4 634 407**

**IBM TECHNICAL DISCLOSURE BULLETIN,**
**Band 28, Nr. 7, Dezember 1985, Seiten**
**2986-2987, Armonk, US; "Belt tensioner"**

(73) Patentinhaber: **MANNESMANN Aktiengesell-**
**schaft**
**Mannesmannufer 2**
**W-4000 Düsseldorf 1(DE)**

(72) Erfinder: **Bischof, Stefan, Dipl.-Ing. (FH)**
**Forchenweg 14**
**W-7900 Ulm-Jungingen(DE)**
Erfinder: **Steppe, Erich**
**Kelternweg 51**
**W-7900 Ulm(DE)**

(74) Vertreter: **Presting, Hans-Joachim, Dipl.-Ing.**
**Meissner & Meissner Patentanwaltsbüro et**
**al**
**Hohenzollerndamm 89**
**W-1000 Berlin 33(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Spannen eines Zugelementes in einem Drucker, insbesondere in einem Matrixdrucker, das mit einem in einer Führung hin- und herbewegbaren Schlitten, Wagen o.dgl. verbunden, über eine gestellfeste, drehgelagerte angetriebene erste Umlenkrolle und über eine zweite drehgelagerte, im Sinne einer Zugkrafterhöhung des Zugelementes einstellbare Umlenkrolle geführt ist.

Derartige Vorrichtungen zum Spannen eines Zugelementes in Druckern werden vornehmlich für Antriebsriemen oder Antriebsseile eingesetzt, die bewegte Teile antreiben. Sie können jedoch auch eingesetzt werden, wenn das Zugelement ruhend ist und ein Teil an dem vorgespannten Zugelement geführt wird. In seriellen Druckern wird das gestraffte Zugelement für die Bewegung eines Druckkopfes benötigt, um eine präzise Positionierung der zu druckenden Zeichen zu gewährleisten. Dieser Zustand muß während einer vorausgesetzt hohen Lebensdauer des Druckers erhalten bleiben. Hier wird nur von einer geringen Service-Arbeit zum Nachstellen der nachlassenden Spannung in einem Anfangszustand der aufgebrachten Spannung ausgegangen. Derartige Funktionen werden an Matrixdruckern, Typenraddruckern und dgl. Büromaschinen verlangt.

Die eingangs bezeichnete Vorrichtung ist aus der DE-C2-33 19 671 bekannt. Hierbei ist die als Spannrolle (einstellbare Umlenkrolle) dienende Umlenkrolle an einem Schwenkhebel befestigt, an dem ein (über eine aus einem Stift und einem Schlitz bestehende Verbindung) Schieberkeil bewegbar gelagert ist, wobei eine Feder am Schieberkeil derart angreift, daß dieser mit einer Kante in Anlage mit einer Gleitfläche der Seitenwand gehalten wird und daß der Winkel zwischen der Gleitfläche der Seitenwand und der geometrischen Mittellinie des Schlitzes derart festgelegt ist, daß der Schieberkeil beim Verschwenken des Schwenkhebels reibend an der Gleitfläche verschoben wird. Eine derartige Spannvorrichtung benötigt ersichtlich eine große Anzahl von Teilen und ist deshalb unwirtschaftlich herstellbar, umständlich zu montieren und aufwendig zu justieren und erfordert u. U. eine teure Lagerhaltung und eine teure Teileverwaltung.

"Eine aus einem Kunststoffteil hergestellte Einrichtung zum Spannen eines Zugelementes ist als integrierter Teil eines Bodens oder Seitenrahmens bekannt (IBM-Technical Disclosure Bulletin, Vol. 28 Nr. 7, Dez. 1985). Hierbei ist ein angespritzter Arm vorgesehen, der eine Umlenkrolle mit ihren Achsen in einer Mulde am Armende stützt. Zwischen der der Mulde abgewandten Seite des Armendes und der Rahmenplatte ist ein elliptisches Spreizrad eingefügt, das mit Zähnen versehen ist, die in Zahnlücken des Armendes und der Rahmenplatte eingreifen. Bei Drehung des Spreizrades wird daher das Armende von der Bodenplatte wegbewegt und bei entgegengesetzter Drehung angenähert. Hier können nur die Wirkungen eines federnden Armes ausgenutzt werden. Bei zu hoher Spannkraft der Arme besteht die Gefahr, daß die angespritzten Arme überbeansprucht werden. Die bekannte Einrichtung gestattet demzufolge nur, niedrige Spannkräfte zu erzeugen."

Der Erfindung liegt demgegenüber die Rufgabe zugrunde, eine einfache, mit nur wenigen Teilen funktionsfähige und deshalb wirtschaftlich herstellbare und montierbare Spannvorrichtung zu schaffen, deren Wirkung zumindest gleich oder besser ist.

Die gestellte Rufgabe wird bei der eingangs bezeichneten Vorrichtung erfindungsgemäß dadurch gelöst, daß zumindest in einer Seitenplatine des Druckergestells parallel zum Verlauf des Zugelementes ein Paar Stehlager vorgesehen sind, die zwischen sich eine Öffnung bilden und äußere, den Umfang bildende Steuerkurven und innere Längsführungen für die Rollenachsen aufweisen, daß zwischen die Stehlager in die öffnung ein Spannkorper mit Lagerschlitzen für die Rollenachsen einführbar ist, der mit den Steuerkurven der Stehlager selbsthemmend zusammenwirkende Gegensteuerkurven aufweist, die jeweils an einem inneren Umfang eines Ringabsatzes eines Scheibenkörpers vorgesehen sind und daß durch Verdrehen des Spannkörpers das Zugelement spannbar ist. Damit ist nur noch ein Spannkörper als Einzelteil erforderlich, der alle notwendigen Funktionen in sich vereinigt und dennoch einen ausreichend großen Spannweg und eine sichere Fixierung des Spannzustandes gewährleistet. Ein solcher Spannkörper kann derart symmetrisch ausgebildet sein, daß er gleichzeitig auch als Lagerkörper fungiert, wenn er nicht als Spannkörper benötigt wird. Der Spannkörper ist demzufolge gleichermaßen für die erste und zweite Umlenkrolle einsetzbar.

Zwei Scheibenkörper können mittels eines Quersteges verbunden sein, der einen Handhebel bildet.

Die Fixierung des Spannzustandes wird außerdem dadurch verbessert, indem an dem inneren Umfang des Ringabsatzes eine Rastverzahnung und an dem äußeren Umfang eines Stehlagers ein Rastvorsprung angeordnet sind. Diese Ausbildung sichert eine stufenweise Rastung und ein dosiertes Spannen des Zugelementes.

Toleranzungenauigkeiten der Seitenplatinen, der Stehlager und des Spannkörpers können dadurch ausgeglichen werden, daß die zwei Scheibenkörper und der Quersteg einstückig aus thermoplastischem Kunststoff hergestellt sind. Ein solcher Spannkörper ist in sich elastisch und paßt sich daher den Abmessungen der Seitenplatinen bzw. der Stehlager entsprechend günstig an.

Ein Ausführungsbeispiel der Erfindung ist in der Zeichnung dargestellt und wird im folgenden näher beschrieben. Es zeigen

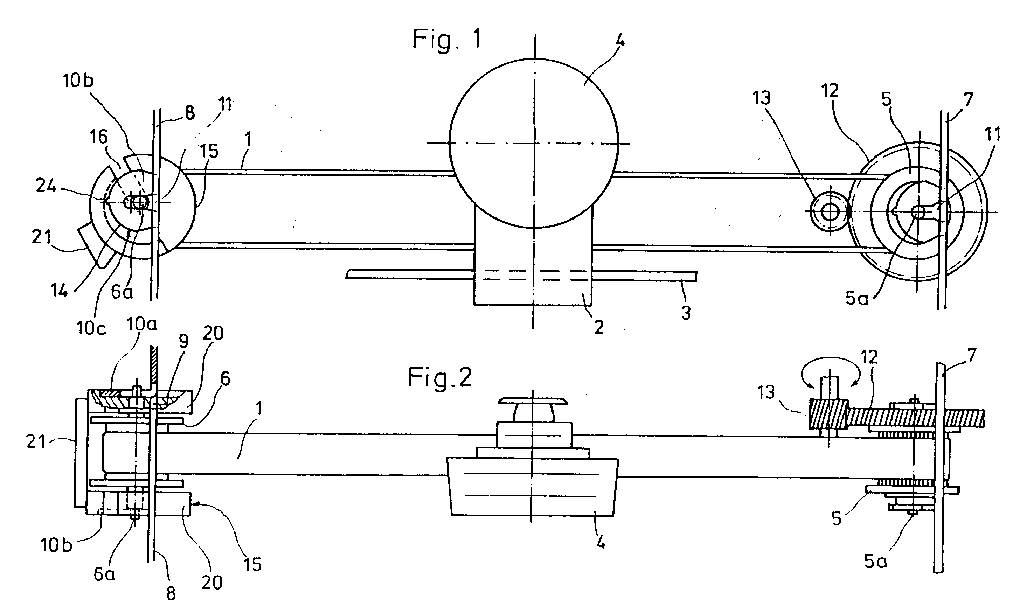

Fig. 1 eine Seitenansicht der Spannvorrichtung, wobei alle übrigen Elemente eines Druckers, die nicht mit der Erfindung im Zusammenhang stehen, weggelassen sind,

Fig. 2 eine Draufsicht auf die Spannvorrichtung in Fig. 1,

Fig. 3 eine Stirnansicht des Spannkörpers in vergrößertem Maßstab und die

Fig. 4 bis 6 jeweils eine Seitenansicht im Ausschnitt auf die linke Druckerseite in einzelnen Phasen der Stellung und Lage des Spannkörpers der Spannvorrichtung.

Die Spannvorrichtung dient zum Spannen eines Zugelementes 1 in einem Drucker der Bauart, die einen Schlitten 2 aufweist, der in einer Führung 3, die aus Paaren von parallelen Stangen besteht, durch das Zugelement 1 hin- und herbewegt wird, wobei sich auf dem Schlitten 2 ein Druckkopf 4 befindet. Der Druckkopf 4 trägt nicht weiter dargestellte Druckelemente, wie z.B. Drucknadeln, Thermodruckelemente, Typen o.dgl, die (über ein Farbband) auf einer Papierbahn Druckzeichen erzeugen. Um eine jeweils gleichbleibende Spalte des Druckbildes anfahren zu können, ist es eine Grundvoraussetzung, den Schlitten 2 bzw. den Druckkopf 4 in gleichbleibenden Schritten oder in einer konstanten Bewegung hin- und herzubewegen. Das Zugelement 1 besteht im allgemeinen aus Stahldrahtseilen oder Gummiriemen, wie z.b. Zahnriemen. Für das geschlossene Zugelement 1 sind deshalb eine gestellfeste, drehgelagerte und angetriebene erste Umlenkrolle 5 und eine zweite drehgelagerte im Sinne einer Zugkrafterhöhung des Zugelementes 1 einstellbare Umlenkrolle 6 vorgesehen. Die erste Umlenkrolle 5 und die zweite, einstellbare Umlenkrolle 6 sind in Seitenplatinen 7 und 8 angeordnet, die zusammen ein Druckergestell bilden. In zumindest der Seitenplatine 8 entsteht durch Schneiden und Biegen eine Öffnung 9, wobei ein Paar Stehlager 10a und 10b geformt werden. Die Stehlager 10a und 10b sind mit schlitzförmigen Längsführungen 11 versehen, in denen die Umlenkrollen 5 und 6 mit ihren Rollenachsen 5a bzw. 6a drehgelagert sind.

In der Seitenplatine 7 ist die erste Umlenkrolle 5 starr drehgelagert, weil auf ihr ein Antriebszahnrad 12 befestigt ist, in das ein Antriebsritzel 13 eines im Druckergestell angeordneten Antriebsmotors eingreift. Dieser Antriebsmotor ist reversibel betätigbar.

Die Stehlager 10a und 10b bilden neben den inneren Längsführungen 11 für die Rollenachsen 5a, 6a noch äußere Steuerkurven 14, die mit einem Spannkörper 15 zusammenwirken.

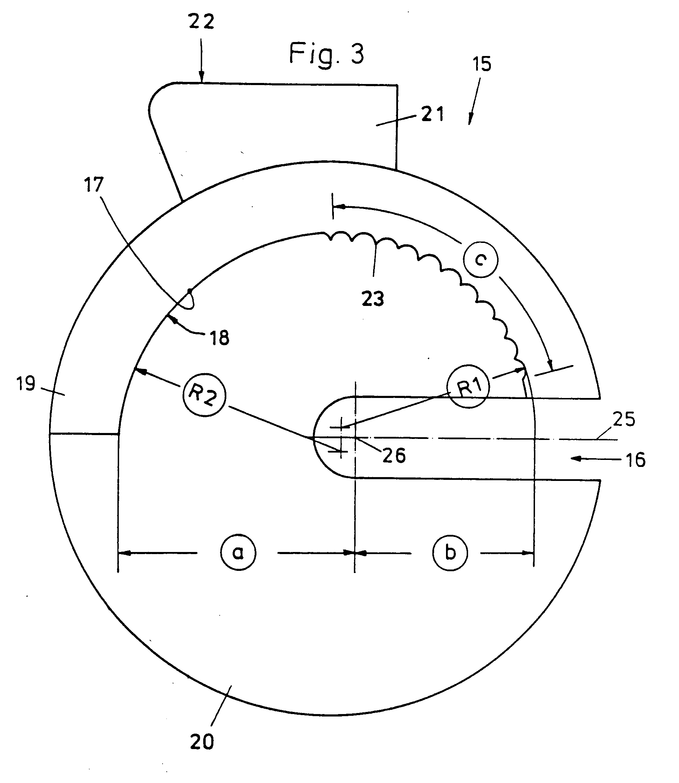

Der Spannkörper 15 ist in Fig. 3 größer dargestellt. Zunächst weist der Spannkörper 15 zwei für die Rollenachsen 5a bzw. 6a bemessene Lagerschlitze 16 auf. Sodann sind mit den Steuerkurven 14 der Stehlager 10a,10b selbsthemmend zusammenwirkende Gegensteuerkurven 17 am Spannkörper 15 vorhanden, deren Funktion noch näher erläutert wird. Die Steuerkurven 14 der Stehlager 10a und 10b sind jeweils an deren äußerem Umfang 10c angeformt. Demgegenüber befinden sich die Gegensteuerkurven 17 des Spannkörpers 15 jeweils an einem inneren Umfang 18 eines Ringabsatzes 19 eines Scheibenkörpers 20.

Zwei solcher Scheibenkörper 20 sind mittels eines Quersteges 21 miteinander verbunden, so daß sich für den Spannkörper 15 gleichzeitig ein Handhebel 22 ergibt.

An dem inneren Umfang 18 des Ringabsatzes 19 ist eine Rastverzahnung 23 vorgesehen, in die ein an dem äußeren Umfang 10c eines der Stehlager 10a bzw. 10b ein Rastvorsprung 24 eingreift.

Der Spannkörper 15 bildet in der praktischen Ausführungsform einen kleineren Radius R1 und einen größeren Radius R2, die außerhalb der Mittenachse 25 angeordnet sind, so daß sich Maße a und b ergeben, wobei der gesamte Spannweg a minus b beträgt. Dieser Maß für den Spannweg ist in einem praktischen Fall 2,5 mm. Der Abstand der Radien R1 und R2 vom Achsmittelpunkt 26 führt zu der engerwerdenden Gegensteuerkurve 17 in einem Rastbereich c. Diese Gegensteuerkurve 17 kann selbstverständlich auch durch andere Kurvenformen als Exzenter-Lösungen gestaltet werden. Die Scheibenkörper 20 können auch einzeln in die Seitenplatinen 7 und 8 eingerastet bzw. abgestützt werden, falls kein Handhebel 22 erwünscht ist.

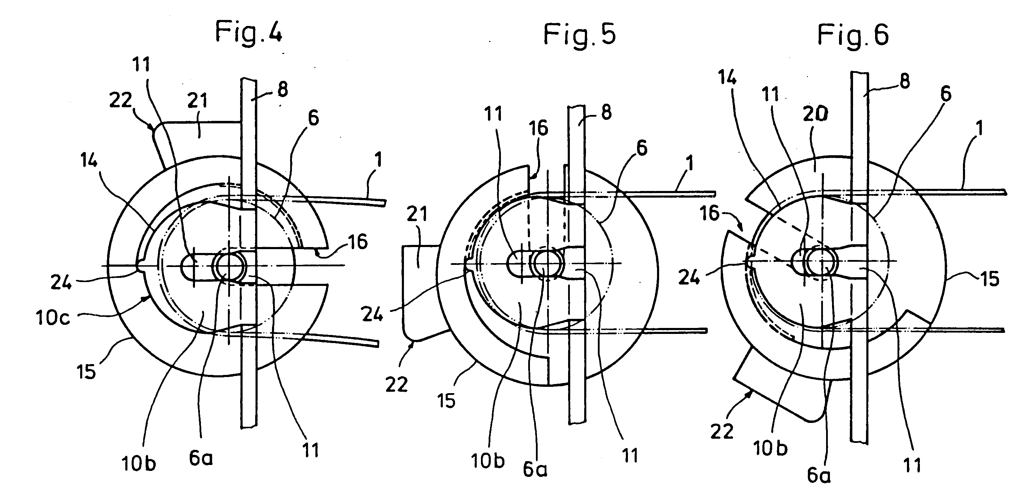

In Fig. 4 ist die Umlenkrolle 6 in das umschlingende Zugelement 1 eingehängt, die Rollenachsen 6a sind in die Längsführungen 11 der Seitenplatine 8 eingeführt, und der Spannkörper 15 ist mit den Lagerschlitzen 16 der beiden Scheibenkörper 20 über die Rollenachsen 6a geschoben. In dieser Phase ist das Zugelement 1 noch locker. Hierbei liegt der Quersteg 21 noch an der Seitenplatine 8 an und bildet vorteilhafterweise einen Anschlag oder auch eine Null-Stellung.

Gemäß Fig. 5 hat eine Schwenkung des Spannkörpers 15 um ca. 90 Grad stattgefunden, wobei die Gegensteuerkurve 17 auf dem äußeren Umfang 10c der Stehlager 10a bzw. 10b gleitet und die Spannung des Zugelementes 1 erhöht.

In der Position der Fig. 6 ist der Spannkörper 15 in seiner Endstellung, in der der Rastvorsprung 24 in die Rastverzahnung 23 noch einrastet. In dieser Stellung des Spannkörpers 15 ist das Zugelement 1 voll gespannt.

**Patentansprüche**

1. Vorrichtung zum Spannen eines Zugelementes (1) in einem Drucker, insbesondere in einem Matrixdrucker, das mit einem in einer Führung (3) hin- und herbewegbaren Schlitten (2), Wagen o. dgl. verbunden, über eine gestellfeste, drehgelagerte angetriebene erste Umlenkrolle (5) und über eine zweite drehgelagerte, im Sinne einer Zugkrafterhöhung des Zugelementes (1) einstellbare Umlenkrolle (6) geführt ist, dadurch gekennzeichnet,
daß zumindest in einer Seitenplatine (7;8) des Druckergestells parallel zum Verlauf des Zugelementes (1) ein Paar Stehlager (10a,10b) vorgesehen sind, die zwischen sich eine Öffnung (9) bilden und äußere, den Umfang bildende Steuerkurven (14) und innere Längsführungen (11) für die Rollenachsen (5a;6a) aufweisen, daß zwischen die Stehlager (10a,10b) in die Öffnung (9) ein Spannkörper (15) mit Lagerschlitzen (16) für die Rollenachsen (5a,6a) einführbar ist, der mit den Steuerkurven (14) der Stehlager (10a,10b) selbsthemmend zusammenmenwirkende Gegensteuerkurven (17) aufweist, die jeweils an einem inneren Umfang (18) eines Ringabsatzes (19) eines Scheibenkörpers (20) vorgesehen sind und daß durch Verdrehen des Spannkörpers (15) das Zugelement (1) spannbar ist.

2. Vorrichtung nach Anspruch 1, dadurch gekennzeichnet,
daß zwei Scheibenkörper (20) mittels eines Quersteges (21) verbunden sind, der einen Handhebel (22) bildet.

3. Vorrichtung nach den Ansprüchen 1 oder 2, dadurch gekennzeichnet,
daß an dem inneren Umfang (18) des Ringabsatzes (19) eine Rastverzahnung (23) und an dem äußeren Umfang (10c) eines Stehlagers (10a,10b) ein Rastvorsprung (24) angeordnet sind.

4. Vorrichtung nach den Ansprüchen 1 bis 3, dadurch gekennzeichnet,
daß die zwei Scheibenkörper (20) und der Quersteg (21) einstückig aus thermoplastischem Kunststoff hergestellt sind.

**Claims**

1. Device for tensioning a traction element (1) in a printer, in particular in a matrix printer, which is connected to a slide (2), carriage or the like, which can be reciprocated in a guide (3), which element is guided over a first driven rotatably mounted deflection roller (5), which is fixed to the frame, and over a second rotatably mounted deflection roller (6), which can be adjusted to increase the tractive force of the traction element (1), characterised in that a pair of pedestal bearings (10a, 10b) is provided parallel to the path of the traction element (1), at least in one side plate (7; 8) of the printer frame, which bearings form between them an opening (9) and comprise outer cams (14), which form the circumference, and inner longitudinal guides (11) for the roller shafts (5a; 6a), that a tension member (15) with bearing slots (16) for the roller shafts (5a, 6a) can be inserted in the opening (9) between the pedestal bearings (10a, 10b), which member comprises counter-cams (17), which cooperate with the cams (14) of the pedestal bearings (10a, 10b) in a self-locking manner and which are in each case provided at an inner circumference (18) of an annular shoulder (19) of a disc member (20), and that the traction element (1) can be tensioned by turning the tension member (15).

2. Device according to claim 1, characterised in that two disc members (20) are connected by means of a crossbar (21) which forms a hand lever (22).

3. Device according to claim 1 or 2, characterised in that a locking tooth system (23) is disposed at the inner circumference (18) of the annular shoulder (19) and a locking projection (24) is disposed at the outer circumference (10c) of a pedestal bearing (10a, 10b).

4. Device according to claims 1 to 3, characterised in that the two disc members (20) and the crossbar (21) are produced in one piece from a thermoplastic plastic.

**Revendications**

1. Dispositif pour tendre un élément de traction (1) dans une imprimante, en particulier une imprimante matricielle, élément qui est relié à un chariot (2) ou analogue pouvant se déplacer dans un guide (3), et qui est guidé sur une première poulie de renvoi (5) fixée au bâti, entraînée, et pouvant tourner et sur une deuxième poulie de renvoi (6) pouvant tourner et réglable dans le sens d'une augmentation de la force de traction de l'élément de traction (1),

caractérisé en ce que, au moins dans une platine latérale (7,8) du bâti de l'imprimante parallèlement au déplacement de l'élément de traction (1), est prévue une paire de paliers (10a,10b) qui forment entre eux une ouverture (9) et qui présentent des cames de commande (14) externes formant la périphérie et des guides longitudinaux internes (11) pour les axes des poulies (5a,6a), en ce qu'un tendeur (15) présentant une fente (16) pour les axes des poulies (5a,6a) peut être introduit dans l'ouverture (9) entre les paliers (10a,10b), tendeur qui présente des contre-cames de commande (17) à blocage automatique coopérant avec les cames de commande (14) des paliers (10a,10b), contre-cames qui sont prévues à chaque fois sur la périphérie interne (18) d'un rebord annulaire (19) d'un disque (20), et en ce que l'élément de traction (1) est tendu par la torsion du tendeur (15).

2.   Dispositif selon la revendication 1, caractérisé en ce que deux disques (20) sont reliés à l'aide d'une traverse (21) formant un levier à main (22).

3.   Dispositif selon les revendications 1 ou 2, caractérisé en ce qu'une denture d'encliquetage (23) est agencée sur la périphérie interne (18) du rebord annulaire (19) et une saillie d'encliquetage (24) est agencée sur la périphérie externe (10c) d'un palier (10a,10b).

4.   Dispositif selon les revendications 1 à 3, caractérisé en ce que les deux disques (20) et la traverse (21) sont réalisés en une seule pièce à partir d'une matière synthétique thermoplastique.

Fig. 1

Fig.2

Fig. 3

Fig.4 Fig.5 Fig.6